# EUROPEAN PATENT APPLICATION

(11) **EP 0 672 771 A2**
(43) Date of publication of application: **20.09.1995**
(21) Application number: 95200276.4
(22) Date of filing: 06.02.1995
(51) Int. Cl.: D04H 1/00

(54) **Method/apparatus for making fibre-filled cushions**

(30) Priority: 18.03.1994 US 214510
(71) Applicant: GENERAL MOTORS CORPORATION, Detroit Michigan 48202 (US)
(72) Inventor: Gill, Prem Paul, Rochester Hills, Michigan 48307 (US)
(74) Representative: Denton, Michael John

(57) **Abstract**

Method and apparatus for quickly, and substantially uniformly, heating and cooling a bed of polymeric fibres (10) having high melting-point and low melting-point fibres therein for softening the low melting-point fibres and bonding them to the high melting-point fibres to form a seat cushion. Hot and cool gases are flowed through the bed of fibres (10) to effect the heating/cooling.

## Description

This invention relates to a method/apparatus for making cushions from a mixture of polymeric fibres having different melting points wherein the lower melting-point fibres serve as a binder for the higher melting-point fibres, as specified in the preamble of claim 1.

Automobile seats (ie, seats and backrests) have heretofore, for the most part, been made from fabric-covered foam cushion material. The furniture industry has found that fibre cushions are more durable than foam, more breathable than foam, less costly than foam, more readily recyclable than foam, and do not emit gases during processing. Such cushions would offer similar advantages to automobile manufacturers desirous of reducing costs and increasing the recyclable content of its vehicles.

It is known to make fibre-filled cushions from mixtures of high melting-point and low melting-point fibres by heating the mixture in an oven so as to soften and unite the low melting fibres (hereafter termed "bonding fibres") with the high melting fibres (hereafter termed "matrix fibres") at their points of intersection, and then cooling the mixture sufficiently to bond the bonding fibres to the matrix fibres. Typically, the bonding fibres comprise only about 25% to about 30% by volume of the fibre mix, but more or less may be used. It is difficult to achieve uniform bonding of the fibres in an oven in a short processing cycle time and this difficulty increases as the thickness of the cushions increases. Often the fibres at the centre of the cushion do not fuse as well as those closer to the surface of the cushion. Attempts to accelerate heating in the centre of the mixture by increasing the oven temperature only serves to overheat the fibres closer to the surface. Such a process is not only difficult to control but results in a non-uniform product. On the other hand, using lower oven temperatures, and consequently longer heating times adds to the cycle time and cost of the process.

A method of moulding a porous, breathable seat cushion according to the present invention is characterised by the features specified in the characterising portion of claim 1. An apparatus for carrying out the method of the present invention is characterised by the features specified in the characterising portion of claim 12.

It is a principle object of the present invention to provide a unique, readily controllable process and apparatus for quickly and substantially uniformly heating a mixture of high and low melting-point fibres to make a seat cushion, and particularly a process/apparatus which is readily adaptable to producing cushions with distinct zones having different physical properties (eg, softness). This and other objects and advantages of the present invention will become more readily apparent from the detailed description thereof which follows.

Methodwise, the present invention comprises a technique for making a porous, breathable, recyclable seat cushion from a mixture of polymeric matrix fibres having a first melting-point and polymeric bonding fibres having a second melting-point which is lower than that of the matrix fibre wherein the bonding fibres are softened and unite with the matrix fibres so as to act like a binder holding the fibres together in a desired shape. More specifically, the fibre mixture is introduced into a mould cavity having a shape conforming substantially to the desired shape of the cushion. The fibres are compressed in the mould cavity to a predetermined density and shape, and heated gas is passed therethrough for a time and at a temperature sufficient to soften and unite the lower melting bonding fibres to the higher melting matrix fibres at their points of intersection. Thereafter, cooling gas is passed through the mixture for a time and at a temperature sufficient to bond the bonding and matrix fibres together such that the mixture retains the shape of the mould cavity. For economic, environmental and convenience reasons the heated gas will preferably comprise air. Other gases, eg nitrogen, may be used but are seen to offer no advantages and only add to the cost. Cooling of the fibre mixture in the mould will preferably be accomplished by passing cooling gas (preferably air) through the fibres in essentially the same manner as the heated gas is passed therethrough to soften the bonding fibres and weld them to the matrix fibres. The fibres will comprise any of a variety of natural or synthetic polymeric materials known to be useful for such applications including polyethylene, polypropylene, polyamide, aramides and polyesters. Preferably, the fibres will comprise a mixture of high and low melting species of polyethylene terephthalate (hereinafter termed "PET"), because such fibres have better durability, compression recovery and are readily recyclable.

While for simplicity and recyclability, the bonding fibres will preferably comprise the same type of polymer (eg, all polyesters) as the matrix fibres, the bonding fibres may comprise a different polymer than the matrix fibres. Hence, for example, polyester matrix fibres may be admixed with polypropylene bonding fibres. The matrix fibres will vary in length from about 31.75 mm (1¼ inches) to about 38.1 mm (1½ inches), vary in diameter from about 15 denier to about 25 denier, and comprise about 70 percent to about 75 percent by volume of the fibre mixture. Similarly, the bonding fibres will vary in length from about 31.75 mm (1¼ inches) to about 38.1 mm (1½ inches), vary in diameter from about 6 denier to about 9 denier, and comprise about 25 percent to about 30 percent by volume of the fibre mixture. Commercially available synthetic fibres useful with the present invention include, for example:
1. Polypropylene fibres sold by the Fibres South Co. of Trussville, AL, USA, under the trade name PolyStar^{R};
2. Polyethylene and polypropylene fibres sold by the Hercules Co. of Norcross, GA, USA;
3. Polyethylene terephthalate fibres sold by the Hoechst Celanese Co. of Charlotte, NC, USA, under the trade names Trevira and Celbond;
4. Polyamide, aramide and polyethylene terephthalate fibres sold by the EI duPont deNemours Co USA, under the trade names Nylon, Nomex/Kevlar and Dacron, respectively; and
5. Polyethylene terephthalate fibres sold by the Eastman Chemical Products Co USA, under the trade name Kodel.

With the mould partially open, the fibre mixture is preferably blown into the mould cavity while, at the same time, a current of air is directed downwardly onto the mixture entering the mould so as to help distribute and pack the fibres substantially evenly in the mould cavity. After the mould is closed and the fibres compressed, PET mixtures will have bulk density of about 28.03 kg/m³ (1.75 lbs/ft³) to about 40.05 kg/m³ (2.5 lbs/ft³) which represents about 2 percent to about 3 percent by volume fibres and the remaining volume voids (ie, about 97 percent - 98 percent porous). The density of any particular cushion will vary with the composition and specific gravity of the particular fibres used. The fibre mix will typically comprise about 25 percent to about 30 percent by volume of bonding fibres. Preferably, the bonding fibres will have a melting-point at least about 60°C lower than the melting-point of the matrix fibres so that substantially only the bonding fibres will soften during the heating step. Most preferably, the melting-point differential will be above 70-80°C. Preferably, the melting-point of the matrix fibres will be at least about 250°C, and the melting-point of the bonding fibres between about 150°C and about 210°C. In accordance with a most preferred embodiment of the invention, the melting-point of the matrix fibres will be at least about 260°C, and the melting-point of the bonding fibres will be about 180°C, or more depending on the melting-point of the matrix fibres.

In accordance with another aspect of the present invention, a cushion will be made with at least two zones having with different physical properties (eg, compressibility/softness). In this regard, a first mixture of fibres is introduced into the mould and compressed in the manner described above. Thereafter, appropriate tooling further compresses a selected portion of the first mixture to form a depression therein adapted to receive a second mixture of fibres. The cushion is then heated and cooled in the manner described above so as to form the cushion with the depression therein. Thereafter, the second mix of fibres is dispensed into the depression, and compressed therein followed by heating and cooling, as discussed above, so as to bond the fibres of the second mix to themselves and to the fibres of the first mix forming the first zone of the cushion. In accordance with this latter embodiment, the second mix of fibres may have a different chemical composition than the first mix forming the first zone of the cushion, or it may have the same chemical composition of the first mix but is simply formed with more or less density than that comprising the first zone of the cushion. Hence, for example, a circumferential zone of the cushion may have a higher density than a central zone of the cushion and may be achieved by simply compressing the mixture in the central zone (ie, in the depression) by a lesser amount than the mixture in the circumferential zone surrounding the central zone.

Once the composition and the melting-points of the fibres have been selected, the process is readily controllable by simply monitoring the temperature of the heating/cooling gases at different sites in the system. In this regard, the temperature of the gas is measured just before it enters the fibre mixture and again just as it exits the fibre mixture. When the temperature of the exiting gas approaches the temperature of the entering gas, heating is discontinued and cooling gas is admitted to the mixture. Thereafter, when the temperature of the cooling gas exiting the mixture approaches the temperature of the cooling gas entering the mixture, the cooling gas is discontinued, the mould opened and the cushion ejected. Preferably the temperature and flow rate of the heating gas is selected so as to soften the bonding fibres after approximately five minutes into the heating cycle.

In accordance with another aspect of the invention, the aforesaid process is carried out in certain preferred equipment. The preferred apparatus includes a female mould member comprising a plurality of walls defining a mould cavity, at least one of which walls (preferably the bottom wall) is gas-permeable. A male mould member, nestable within the mould cavity, is adapted for reciprocal movement into and out of the mould cavity for compressing the fibre mixture therein. The male mould member preferably also has a gas-permeable wall positioned opposite the other gas-permeable wall in the female mould member. A gas plenum system surrounds the gas-permeable walls for providing gases (eg, air) to the mould cavity for heating and cooling the mixture therein. A source of pressurised gas (eg, a blower) communicates with the plenum system for pumping gas through the gas-permeable walls and the mixture of fibres in the mould cavity. A heater communicates with the blower for heating the gas to a temperature sufficient to soften the low melting-point bonding fibres in the mix. For the quickest cycle time and most uniform properties, the gas flow is preferably evenly distributed across the entire cushion and flows through the thinnest cross section of the cushion (eg, bottom-to-top of a seat cushion). Alternatively, the gases could be flowed from side-to-side or front-to-back (ie, in the thicker direction of the cushion), but it takes longer to achieve uniform heating of the cushion. The direction of flow in the plenum system may be reversed so that either the plenum associated with the female mould portion or the male mould portion is the first to receive the gas and the other plenum serves to exhaust the gas.

For filling, at least one injector (and preferably four) enters the mould cavity through an opening(s) in one of the side walls of the mould for dispensing the mixture of fibres into the cavity from a remote source thereof connected to the other end of the injector. Most preferably, the injector(s) passes through an opening in the side of the mould cavity to deliver the mixture thereto and then retracts out of the cavity to permit the male mould member to move unimpeded into and out of the cavity during its compression and retreat cycle. An appropriate drive mechanism (eg, preferably a ball and screw device) engages the injector for effecting the movement of the injector into and out of the cavity. Alternatively, hydraulic/pneumatic cylinders or pack and pinion devices could be used for this purpose. The drive mechanism will initially extend the injector well into the mould cavity (ie, almost to the wall of the cavity opposite the wall having the hole through which the injector enters the cavity). After the fibre begins to flow from the injector into the cavity, the injector is slowly retracted from its initial extended position so as to deposit a substantially uniform layer of fibres onto the floor of the mould cavity. A blower (not shown) coupled to the plenum associated with the male mould member causes a current of downwardly-flowing air to pack the fibres into the bottom of the mould cavity. The fibres will preferably be fed into the injector by means of a jet of gas (ie, air) flowing into the other end of the injector so as to create a vacuum and draw airborne fibres into the injector from a source of such fibres.

A stripper plate engages the cushion in the cavity for ejecting the cushion from the cavity after the cushion has cooled sufficiently for the cushion to retain the desired shape. The stripper plate forms a part of one of the walls of the mould cavity (preferably the gas-permeable wall) and serves to eject the cushion from the mould cavity upon completion of the heating/cooling cycle. The surfaces of the mould cavity and the male mould member which contact the fibres are preferably coated with a fluorocarbon (eg, polytetrafluoroethylene, or the like) to prevent the heated fibres from adhering to such surfaces. Temperature sensors (eg, thermocouples) are provided in the gas plenums adjacent the gas-permeable walls to measure the gas temperature thereat and provide appropriate signals for controlling the process.

The invention will be better understood when considered in the light of the following detailed description of certain specific embodiments thereof which is given hereafter in conjunction with the accompanying drawings, in which:
Figures 1A-1G schematically depict several steps of a process according to the present invention;
Figure 2 is a sectioned, perspective view of male and female mould members of an apparatus in accordance with the present invention; and
Figures 3-5 are partially sectioned, side views of the apparatus of the present invention at different stages in the process.

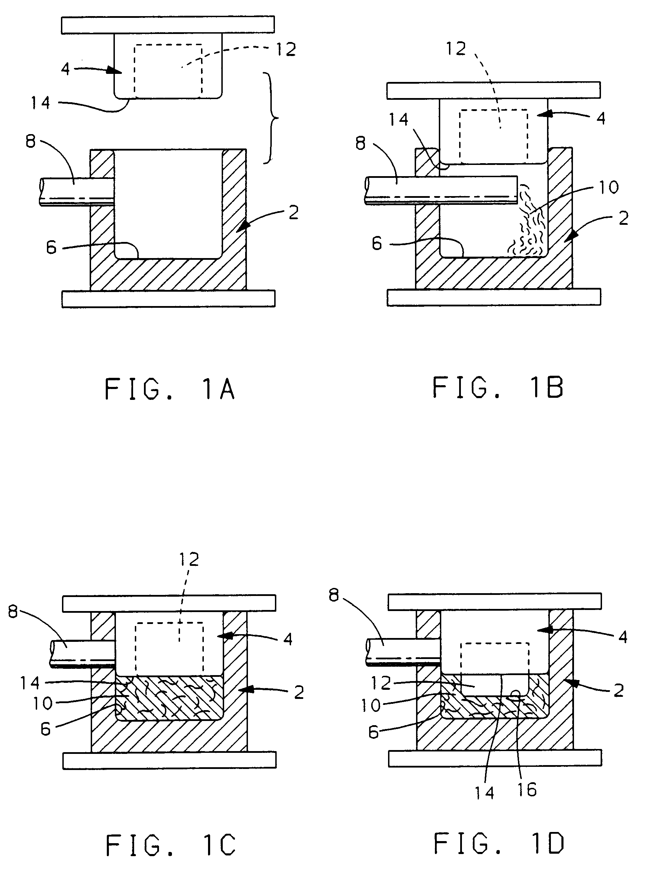

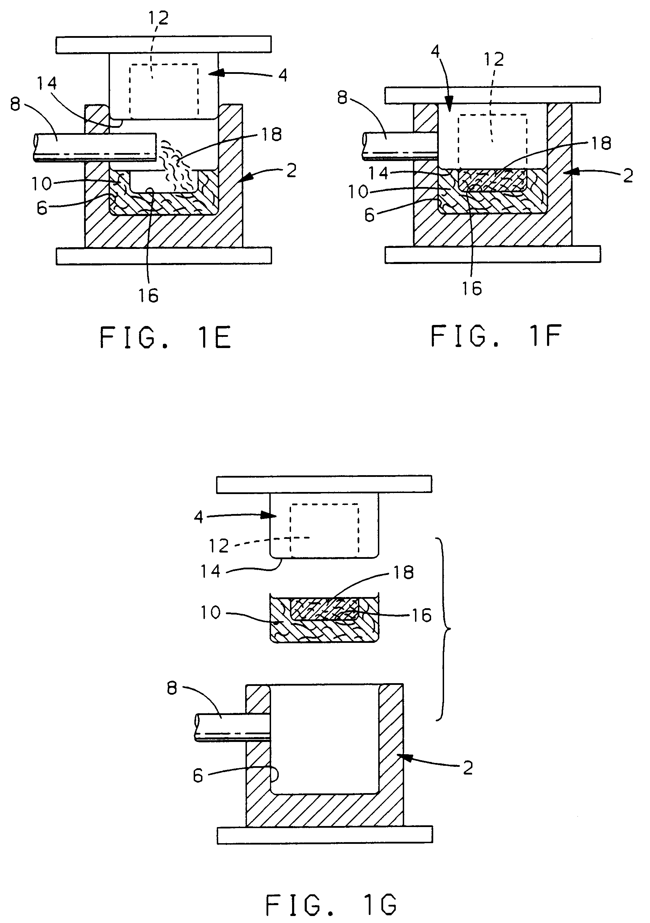

Figure 1A illustrates a female mould member 2 and a male mould member 4 in an open position before fibres are introduced into a cavity 6 from an injector 8. Figure 1B depicts the beginning of the process wherein the male mould member 4 is in a semi-closed position with respect to the female mould member 2 and the injector 8 extends well into the cavity 6 to dispense fibres 10 therein. Figure 1C depicts the injector 8 in a retracted position, and the male mould member 4 fully inserted into the female mould member 2 to compress the fibres 10 in the mould cavity 6. Figure 1D is like Figure 1C except it shows a male mould member extension 12 projecting beyond the face 14 of the male mould member 4 to compress the centre of the fibres 10 more than the fibres surrounding the extension 12 so as to provide a depression 16 in the bed of fibres 10. In this position, heated gas is blown through the fibre mix 10 to soften the low melting-point bonding fibres and unite them to the high melting-point matrix fibres. Thereafter cool air is blown through the fibre mix 10 to solidify the low melting fibres and bond them to the high melting fibres. Figure 1E shows the mould extension 12 retracted into male mould member 4 which itself is raised to the semi-closed position so that the injector 8 may extend back into the cavity 6 in the female mould member 2 for dispensing another mix of fibres 18 into the depression 16 formed in the step shown in Figure 1D.

Figure 1F shows the male mould member 4 re-inserted into the female mould member 2 so as to compress the fibre mix 18 in the depression 16. Hot and cool air is then sequentially passed through the fibre mixes 10 and 18 to respectively heat the low melting bonding fibres in the mix 18 to soften and unite them with the high melting matrix fibres, and to thereafter cool the fibres to bond them to the high melting fibres.

Finally, Figure 1G shows the male member 4 in a fully-opened position, and the cushion formed by the fibre mixtures 10 and 18 ejected from the mould. The process depicted in Figures 1A-1G results in the formation of a cushion having a high density fibre region 10 at the perimeter of the cushion and a low density fibre region 18 at the centre of the cushion or vice versa. However, any combination of different materials or different degrees of compression may be used to achieve the desired result in a finished cushion.

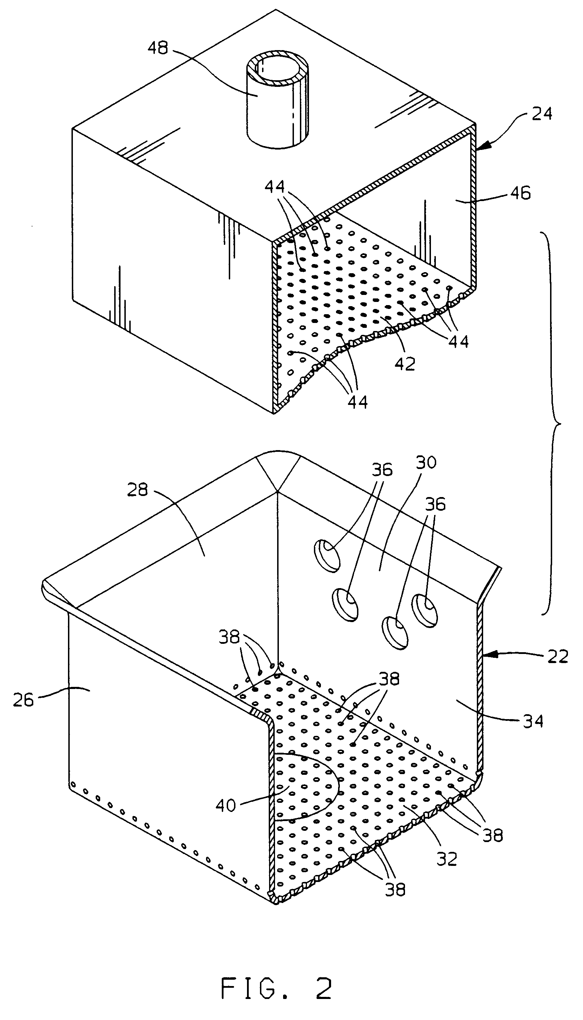

Figure 2 illustrates a female mould member 22 and male mould member 24 in a mould-open position. The female mould member 22 comprises a plurality of walls 26, 28, 30 and 32 defining a mould cavity 34. A plurality of openings 36 are provided in the side wall 30 to receive injectors from a filling machine, as will be described in more detail hereinafter. The bottom wall 32 of the mould 22 comprises a plurality of apertures 38 so as to render the bottom wall 32 permeable to gas. A centremost portion 40 of the wall 32 serves as a stripper plate for ejecting the cushion from the cavity 34 at the end of the processing cycle as will be described in more detail hereinafter. The male mould member 24 comprises a lower wall 42 for shaping the upper surface of the cushion and has a plurality of apertures 44 therein for rendering the wall 42 gas-permeable. The gas-permeable wall 42 is backed up by a plenum 46 which, in turn, is connected to a conduit 48 for exhausting (or providing, as appropriate) heating and cooling gases from the plenum 46.

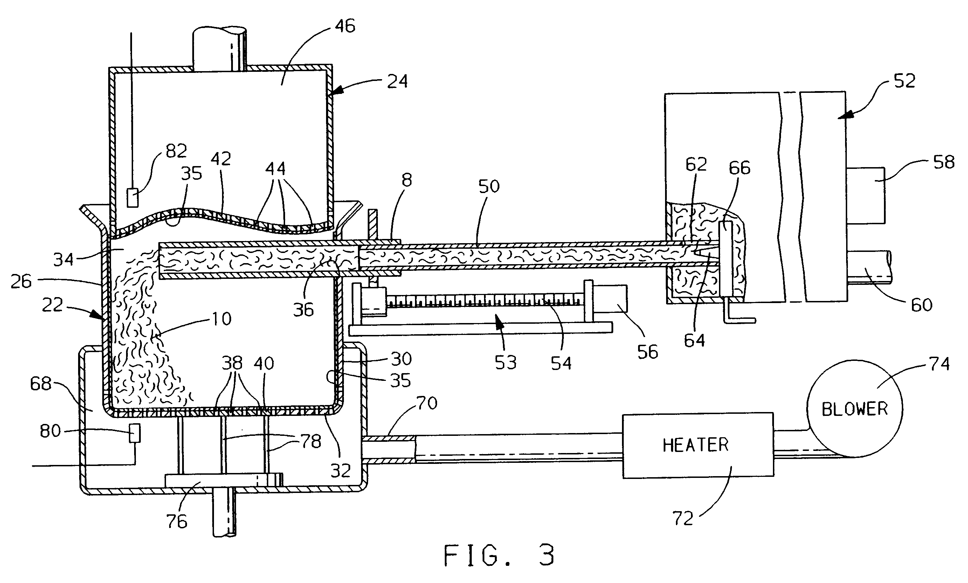

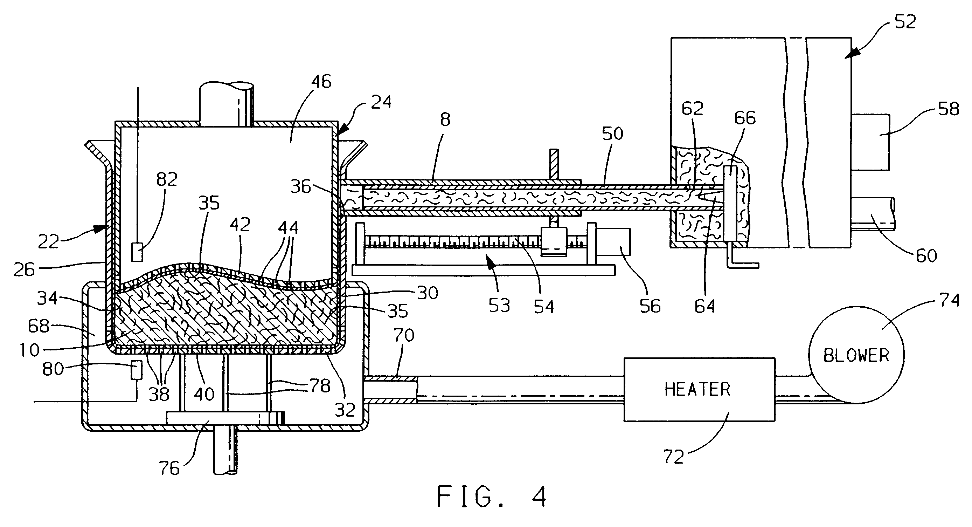

Figures 3-5 depict apparatus for making cushions according to the process described above with different components of the apparatus in different positions at various times in the manufacturing cycle. Figure 3 shows the apparatus essentially at the beginning of the process with the male mould member 24 in a semi-closed position at the mouth of the cavity 34 in the female mould member 22. The injectors 8 (only one shown) extend through the openings 36 to almost the other side of the mould cavity 34 which is itself, along with the wall 42, coated with a Teflon layer 35. The injector 8 fits in telescoping fashion over a 767.2 mm (three inch) diameter stationary feed tube 50 extending from a filling machine 52 and is caused to move to and fro by a drive mechanism 53 which is preferably a ball and screw type linear actuator 54 powered by a reversible motor 56. Alternative drive mechanisms include pneumatic/hydraulic cylinders, rack and pinion gears, or the like (not shown). The injector 8 moves slowly from the fully-extended position shown in Figure 3 to a retracted position shown in Figure 4 as it dispenses the fibres 10 into the mould cavity 34 so as to provide a substantially even distribution of the fibres in the cavity 34 At the same time, the plenum 46 in the upper mould member 24 is pressurised with air so as to provide a current of downwardly-moving air which serves to help distribute the fibres evenly whilst packing them in the bottom of the mould cavity 34.

The filling tube 50 is connected to filling machine 52 which is essentially a commercially available machine marketed for filling pillows with fibres and sold by the Ormont Corporation, USA, as their Model No. TRP11 Commander filling machine. That machine essentially includes a motor 58 for driving a plurality of impellers or blades (not shown) inside the machine for keeping the fibres stirred up and airborne in the machine 52. A conduit 60 delivers the fibres to the machine 52 from a remote source thereof (not shown). The end of the filling tube 50 inside the filling machine 52 is open at the top 62 thereof for admitting the airborne fibres to the tube 50. A nozzle 64 mounted to an air manifold 66 emits a jet of air into the filling tube 50 which draws fibres into the tube 50 through the opening 62 and conveys them down the tube 50 through the injector 8 into the mould cavity 34.

The bottom wall 32 of the mould 22 includes the plurality of apertures 38 so as to render the bottom wall permeable to gases. Similarly, the bottom wall 42 of the male mould member 24 contains the plurality of perforations 44 for the same reason. The bottom of the female mould 22, and hence the gas-permeable wall 32, is encompassed by a plenum 68 which is connected to a conduit 70 for supplying or removing the gases from the plenum 68 as needed. A heater 72 is coupled to the conduit 70 and to a blower 74 for heating air passing through the conduit 70 when the blower 74 is energised to pressurise the plenum 68. Needless to say, the direction of air flow may be reversed (from plenum 46 through the cavity 34 and into plenum 68) without departing from the present invention and by simply relocating the heater and blower.

Stripper plate 40 forms part of the perforated wall 32 and is connected to an elevator 76 by means of rods 78 for ejecting the cushion from the mould cavity 34 upon completion of the heating/cooling cycle. Temperature sensors 80 and 82 (eg, thermocouples) are provided in the plenums 46 and 68, immediately adjacent the walls 32 and 42 respectively for sensing the temperature of the gas at those locations and sending suitable signals to appropriate controllers (not shown) for controlling/automating the process.

Figure 4 is like Figure 3 except that it shows the injector 8 in a fully-retracted position along the tube 50, and the male mould member 24 fully seated in the female mould 22 and compressing the fibre mixture 10 to the desired shape. This position is retained during the heating and cooling cycle which begins by the blower 74 pumping gas (ie, air) through the heater 72 into the conduit 70 and plenum 68, through the gas-permeable wall 32 and the fibre bed 10, and finally exhausting the gas from the bed 10 out the pipe/duct 48 via the gas-permeable wall 42 and plenum 46. Hot air flow continues until the temperature sensed at the sensor 82 approaches that sensed at the sensor 80 which is indicative of the fact that the fibres 10 are substantially uniformly heated throughout and can absorb substantially no additional heat. At this point in time, the heater 72 is shut off, and ambient or cool air is pumped into the plenum 68 and through the fibre mixture to cool and bond the low melting-point fibres to the high melting-point fibres at the intersections thereof. Cooling continues until the temperature at sensor 82 drops to approximately the temperature sensed at sensor 80 which is indicative that the fibres 10 have cooled sufficiently as not to give off any additional heat, and accordingly that the low melting-point fibres have bonded to the high melting-point fibres to an extent sufficient for the cushion to retain the shape provided during the compression step.

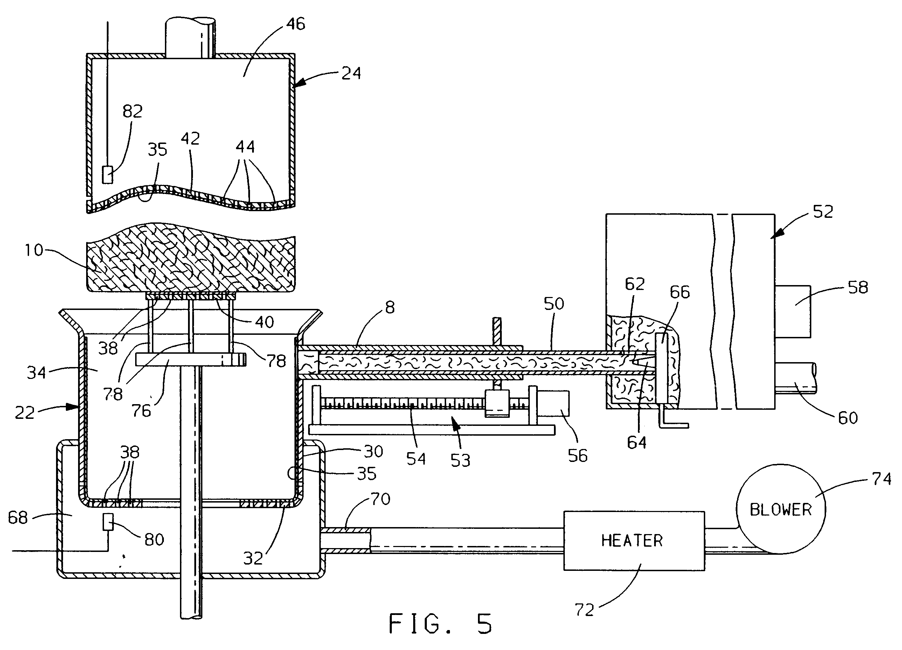

Finally, and as shown in Figure 5, after the fibres 10 have cooled sufficiently to fix the shape of the cushion, the male mould member 24 is retracted to the fully-opened position and the stripper plate 40 lifted, via the elevator 76, to eject the cushion from the female mould 22. After the cushion is removed the elevator 76 descends until the stripper plate 40 repositions itself with the wall 32.

### SPECIFIC EXAMPLE

A seat cushion was made from a mixture of polyethylene terephthalate fibres comprising 75 % by volume matrix fibres manufactured by the Hoechst Celanese Co, USA, under the trade name Trevira, and 25 % by volume bonding fibres manufactured by the Hoechst Celanese Co, USA, under the trade name Celbond. The matrix fibres varied in length from about 31.75 mm (1¼ inches) to about 38.1 mm (1½ inches), and in diameter from about 15 denier to about 25 denier. The matrix fibres had a melting-point of about 250°C and the bonding fibres had a melting-point of about 200°C. The fibre mix was compressed in a mould to a density of about 36.04 kg/m³ (2.25 lbs/ft³), and heated air was passed therethrough at a temperature of 210°C and at a rate of 14.16 CMM (500 CFM) for a period of five minutes. Thereafter, room temperature air replaced the hot air and was flowed through the heated fibres at a rate of 14.16 CMM (500 CFM) for about ten minutes until the temperature of the air exiting the fibres fell below 80°C. The mould was then opened and the cushion ejected therefrom.

While the invention has been disclosed in terms of certain specific embodiments thereof, it is not intended to be limited solely thereto, but rather only to the extent set forth hereafter in the scope of the claims which follow.

The disclosures in United States patent application no 214,510, from which this application claims priority, and in the abstract accompanying this application are incorporated herein by reference.

## Claims

1. A method of moulding a porous, breathable seat cushion by heating a mixture (10) of a polymeric matrix fibre having a first melting-point and a polymeric bonding fibre having a second melting-point lower than said first melting-point to a temperature at which bonding takes place between the fibres, characterising in that the method comprises the steps of: a) dispensing said mixture (10) of a polymeric matrix fibre having a first melting-point and a polymeric bonding fibre having a second melting-point lower than said first melting-point into a mould (22,24) having a cavity (34) conforming substantially to the desired shape of said cushion; b) closing said mould (22,24) so as to compress said fibres (10) in said mould cavity (34) to a desired density; c) passing a heated gas through said mixture (10) for a time and at a temperature sufficient to soften said bonding fibres and unite them with said matrix fibres at their points of intersection; d) passing a cooling gas through said mixture (10) for a time and at a temperature sufficient to bond said bonding fibres to said matrix fibres so that said mixture (10) retains said shape after said mould (22,24) is opened; and e) removing said cushion from said cavity (34).

2. A method according to claim 1, in which said gas is air.

3. A method according to claim 1, in which said matrix and bonding fibres both comprise polyethylene terephthalate.

4. A method according to claim 1, including an additional step of blowing a current of air downwardly onto said mixture (10) during said dispensing to pack and help distribute said fibres substantially evenly in said cavity (34).

5. A method according to claim 1, in which said dispensing is effected by blowing said mixture (10) into said mould cavity (34) progressively from one end of said mould (22,24) to the other end thereof.

6. A method according to claim 1, in which said melting-points of said matrix fibre and said bonding fibre are at least about 60°C apart.

7. A method according to claim 1, in which the melting-point of said matrix fibre is at least about 250°C, and the melting-point of said bonding fibre is about 150°C to about 210°C.

8. A method according to claim 1, including, after step (b), further compressing a selected portion of said mixture (10) in said cavity (34) to form a depression (16) therein, and, after step (d), dispensing into said depression (16) a second mixture (18) of a second polymeric matrix fibre and a second polymeric bonding fibre having a melting-point which is lower than the melting-point of the second matrix fibre, compressing said second mixture (18) in said depression, and cooling said second mixture (18) sufficiently to bond said second bonding fibres to said second matrix fibres and to said first mixture (10) so that said second mixture (18) retains said shape after said compressing step is terminated.

9. A method according to claim 8, in which said second mixture (18) is essentially the same as said first mixture (10) and the extent of said compressing of said second mixture (18) is different than the extent of said compressing of said first mixture (10) so as to produce zones of said cushion having different densities.

10. A method according to claim 8, in which said second mixture (18) is different than said first mixture (10) so as to produce zones of said cushion having different degrees of softness.

11. A method according to claim 1, including the steps of monitoring the temperatures of the gas entering and leaving the cavity (34) to control the method.

12. Apparatus for moulding and bonding a mixture of relatively high melting-point polymeric matrix fibres and relatively low melting-point polymeric bonding fibres together into a compressible, breathable cushion characterised in that the apparatus comprises: a) a female mould member (22) comprising a plurality of walls (26,28,30,32) defining a mould cavity (34), at least one of said walls (32) being gas-permeable; b) at least one injector (8) for dispensing said mixture (10) into said cavity (34); c) a source (52) of said mixture (10) connected to said injector (18) for supplying said mixture (10) to said injector (8); d) a male mould member (24) adapted for reciprocal movement into and out of said mould cavity (34) for compressing said mixture (10) in said cavity (34), said male mould member (24) having a gas-permeable wall (42) for shaping said cushion in said cavity (34); e) a gas plenum system (46,48) contiguous said gas-permeable walls for providing gas to said mould cavity (34) for heating and cooling said mixture (10) in said cavity (34); f) a blower (74) communicating with said plenum system (46,48) for moving said gas through said system and said mixture (10); and g) a heater (72) for heating said gas in said system (46,48) to a temperature sufficient to soften said low-melting bonding fibres and to unite them to said high-melting matrix fibres.

13. Apparatus according to claim 12, further including a stripper plate (40) engaging said cushion in said cavity (34) for ejecting said cushion from said cavity (34) after said fibres have been united and cooled sufficiently to form a self-sustaining cushion.

14. Apparatus according to claim 12, in which said injector (8) reciprocates into said cavity (34) to dispense said mixture (10) therein and out of said cavity (34) to permit unimpeded movement of said male mould member (24) into said cavity (34) to compress and shape said mixture (10) therein.

15. Apparatus according to claim 14, including a drive mechanism (53) for reciprocating said injector (8) into and out of said cavity (34).

16. Apparatus according to claim 15, in which said drive mechanism (53) initially extends said injector (8) well into said cavity (34) at the beginning of a fibre fill cycle, and thereafter slowly retracts the injector (8) during the course of the fill cycle to distribute the fibre mixture (10) substantially evenly throughout the cavity (34).

17. Apparatus according to claim 16, in which said drive mechanism (53) comprises a ball and screw type linear actuator (54).

18. Apparatus according to claim 12, in which said source (52) of said mixture (10) includes a hopper for keeping said mixture (10) airborne and a nozzle (64) directing a jet of gas into the end of said injector (8) opposite the mould end of the injector (8) so as to create a vacuum thereat sufficient to draw said airborne mixture (10) into said injector (8) and convey said airborne mixture into said cavity.

19. Apparatus according to claim 12, in which said stripper plate (40) forms part of said gas-permeable wall (32) of said female mould member (22), and is energised through said plenum (68).

20. Apparatus according to claim 12, including a first sensor (80) in said plenum system (46,68) adjacent said gas-permeable wall (32) of said female mould member (22) and a second sensor (82) in said plenum system (46,68) adjacent said gas-permeable wall (42) of said male mould member (24) for sensing the temperature of the gases entering and exiting the mould cavity (34), and a controller responsive to said sensors (80,82) for controlling the operation of the apparatus.
